# EUROPEAN PATENT APPLICATION

(11) **EP 2 214 097 A2**
(43) Date of publication of application: **04.08.2010**
(21) Application number: 10151578.1
(22) Date of filing: 25.01.2010
(51) Int. Cl.: G06F 3/14

(54) **Image display apparatus, image display system, program and method**

(30) Priority: 30.01.2009 JP 2009020671
(71) Applicant: Seiko Epson Corporation, Shinjuku-ku Tokyo 163-0811 (JP)
(72) Inventor: Nakamura, Yasuhiro, Nagano 392-8502 (JP)
(74) Representative: MERH-IP Matias Erny Reichl Hoffmann

(57) **Abstract**

An image display apparatus (200) includes: an external apparatus connecting unit (204) that is connected with a plurality of image supply apparatuses (100, 110) and receives a plurality of data transmitted from the image supply apparatuses (100, 110); an output unit (209) that outputs an image based on the data to a display unit (201); an operation unit (207) that accepts an input operated by a user; and a control unit (205) that outputs, when an instruction to designate the image supply apparatus that outputs the data to be displayed in the display unit (201) is input by the user via the operation unit (207), a suspension request signal requesting the suspension of supply of the data to the image supply apparatuses other than the image supply apparatus designated by the user.

## Description

### BACKGROUND

### 1. Technical Field

The present invention mainly relates to a data communication between an image supply apparatus that supplies image data, audio data, or the like and an image display apparatus that is connected with the image supply apparatus and displays an image based on data supplied from the image supply apparatus or outputs a sound.

### 2. Related Art

An image display apparatus, for example, a projector is communicably connected with an image supply apparatus such as a computer or a data storage device, receives data successively transmitted from the image supply apparatus, and successively displays images based on the received data on a screen or the like (for example, refer to JP-A-2007-264079).

However, when the image display apparatus is communicably connected with a plurality of image supply apparatuses, image data is supplied from the plurality of image supply apparatuses all the time, and the image display apparatus displays a video based on the successive image data. Therefore, when a plurality of image data is supplied from the plurality of image supply apparatuses, for example, while the image display apparatus displays only a video based on image data supplied from one of the image supply apparatuses, image data supplied from the other image supply apparatuses continues to be input successively even though the image data is not displayed.

Further, many image display apparatuses perform processing such as analysis of image data to expand the same in a storage area with a CPU when image data is input. Therefore, when image data supplied to the image supply apparatus continues to be input, the processing load of the CPU of the image display apparatus is increased because of an increase in data capacity, decreasing use efficiency of the storage area.

### SUMMARY

An object of the invention is to provide an image display apparatus, an image display system, and a program that reduce the processing load of a CPU of an image display apparatus and improve use efficiency of a storage area.
For solving the above-mentioned object, an image display apparatus according to claim 1, an image display system according to claim 4, a program according to claim 6, and method according to claim 12 are proposed. Dependent claims relate to preferred embodiments of the present invention.

A first aspect of the invention is directed to an image display apparatus including: an external apparatus connecting unit that is configured to be connected with a plurality of image supply apparatuses and that is configured to receive a plurality of data transmitted from the image supply apparatuses; an output unit that is configured to output an image based on the data to a display unit; an operation unit that is configured to receive an operation input; and a control unit that is configured to output, when the operation input to designate the image supply apparatus that outputs the data to be displayed in the display unit is input via the operation unit, a suspension request signal requesting the suspension of supply of the data to the image supply apparatuses other than the image supply apparatus designated by the operation input.

Thus, since the supply of data to the image supply apparatus that does not output data to be displayed in the display unit can be suspended, processing such as storing or analysis of data not to be displayed into the memory area is no more required. Therefore, the operational load of a CPU is reduced, and the memory area to be used can be reduced. Further, the image supply apparatus that has received the suspension request signal is brought into a standby state, and identification or the like for the communication method between the image supply apparatus and the image display apparatus is enabled. Therefore, when a resumption request signal of image data transmission is input, image data can be immediately transmitted to the image display apparatus.

In the image display apparatus according to the first aspect of the invention, it is preferable that when another of the image supply apparatuses is designated as the image supply apparatus that outputs the data to be displayed in the display unit via the operation unit, the control unit outputs a resumption request signal requesting the resumption of supply of the data to the designated image supply apparatus and preferably outputs the suspension request signal to the image supply apparatuses other than the designated image supply apparatus.

Thus, the image display apparatus can receive data again from the image supply apparatus that has suspended the transmission of data.

In the image display apparatus according to the first aspect of the invention, it is preferable that the image display apparatus is embodied by a projector that is configured to project an image based on the data on a screen and/or a display that displays an image on a display screen.

In the image display apparatus according to the first aspect of the invention, it is preferable that the image supply apparatus operate in accordance with a signal output from the image display apparatus, suspend the output of the data in accordance with the suspension request signal, and resume the output of the data in accordance with the resumption request signal.

A second aspect of the invention is directed to an image display system including: a plurality of image supply apparatuses; and an image display apparatus that is configured to receive data transmitted from the image supply apparatuses, wherein the image display apparatus includes an external apparatus connecting unit that is connected to the plurality of image supply apparatuses, the external apparatus connecting unit being configured to receive a plurality of data transmitted from the image supply apparatuses, an output unit that is configured to output an image based on the data to a display unit, an operation unit that is configured to receive an operation input, and a control unit that is configured to output, when the operation input to designate the image supply apparatus that outputs the data to be displayed in the display unit is input via the operation unit, a suspension request signal requesting the suspension of supply of the data to the image supply apparatuses other than the image supply apparatus designated by the operation input.
In the image display system according to the second aspect of the invention, it is preferable that when another of the image supply apparatuses is designated as the image supply apparatus that outputs the data to be displayed in the display unit via the operation unit, the control unit outputs a resumption request signal requesting the resumption of supply of the data to the designated image supply apparatus and preferably outputs the suspension request signal to the image supply apparatuses other than the designated image supply apparatus.
In the image display system according to the second aspect of the invention, it is preferable that the plurality of image supply apparatuses operate in accordance with a signal output from the image display apparatus. Accordingly, one or more image supply apparatuses receiving a suspension request signal from the image display apparatus preferably suspend the output of the data in accordance with the received suspension request signal. Further preferably, an image supply apparatus receiving a resumption request signal from the image display apparatus resumes the output of the data in accordance with the received resumption request signal.

A third aspect of the invention is directed to a computer program product stored on a computer-usable medium comprising computer readable program means for causing a first computer to be configured to execute: receiving, by an external apparatus connecting unit configured to be connected to a plurality of second computers, data transmitted from the plurality of second computers; outputting an image based on the data to a display unit; outputting, when an operation input to designate the second computer that outputs the data to be displayed in the display unit is input via an operation unit that is configured to receive the operation input, a suspension request signal requesting the suspension of supply of the data to the second computers other than the second computer designated by the operation input.
The computer program product stored on a computer-usable medium according to the third aspect preferably further comprises computer readable program means for causing the first computer to be configured to execute outputting, when another of the second computers is designated as the second computer that outputs the data to be displayed in the display unit via the operation unit, a resumption request signal requesting the resumption of supply of the data to the designated second computer and outputting the suspension request signal to the second computers other than the designated second computer.

In the program according to the third aspect of the invention, it is preferable that the program further comprises computer readable program means for causing the second computer to execute suspending the output of the data in accordance with the suspension request signal when the suspension request signal is received from the first computer and resuming the output of the data in accordance with the resumption request signal when the resumption request signal is received from the first computer.
A fourth aspect of the invention is directed to a computer program product stored on a computer-usable medium comprising computer readable program means for causing a second computer to be configured to execute suspending the output of the data in accordance with the suspension request signal when the suspension request signal is received from an image display apparatus and resuming the output of the data in accordance with the resumption request signal when the resumption request signal is received from the image display apparatus, the image display apparatus as being described above with reference to at least one of the above first and second aspects of the invention.

### BRIEF DESCRIPTION OF THE DRAWINGS

The invention will be described with reference to the accompanying drawings, wherein like numbers reference like elements.

Fig. 1 is a schematic view for explaining an example of the configuration of an image display system according to a first embodiment.

Fig. 2 is a schematic view for explaining an example of the configuration of image supply apparatuses and an image display apparatus according to the first embodiment.

Fig. 3 is a flowchart showing an example of a method for requesting the suspension of image data of the image display system according to the first embodiment.

Fig. 4 is a flowchart showing an example of a method for requesting the resumption of image data of the image display system according to the first embodiment.

Fig. 5 is a schematic view for explaining an example of the configuration of image supply apparatuses and an image display apparatus according to a second embodiment.

### DESCRIPTION OF EXEMPLARY EMBODIMENTS

Next, embodiments of the invention will be described in detail with reference to the drawings.

### First Embodiment

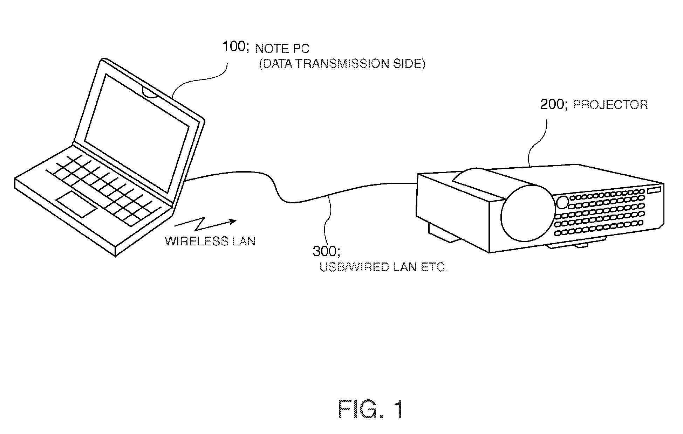

Fig. 1 is a schematic view for explaining an example of the configuration of an image display system according to a first embodiment.

As shown in Fig. 1, the image display system according to the embodiment includes a note type personal computer 100 (hereinafter referred to as note PC 100) as an image supply apparatus and a projector 200 as an image display apparatus. The image display system further includes, for example, a USB cable 300 that connects the note PC 100 with the projector 200 as means for enabling communication between the note PC 100 and the projector 200. The note PC 100 transmits image data to the projector 200 via the USB cable 300, and the projector 200 that has received the image data projects image light corresponding to the image data on any screen to display an image.

While description will be made below by using image data as an example of data communicated between the note PC 100 and the projector 200, the invention is not limited thereto. For example, data may include image data and audio data or may include only audio data.

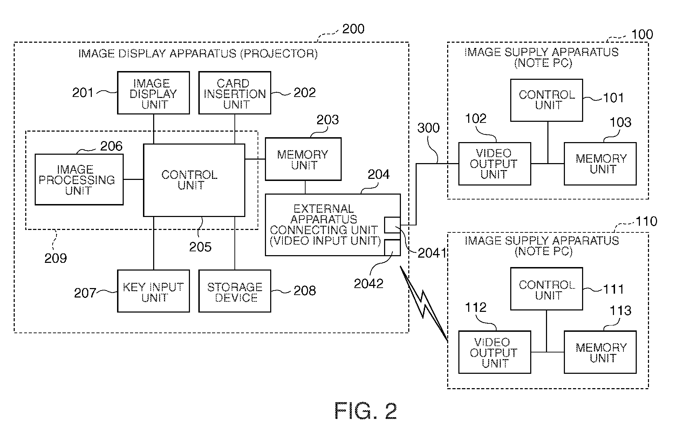

Fig. 2 is a block diagram showing an example of the configuration of the note PC 100 and the projector 200. Fig. 2 shows an example of the image display system in which the note PC 100 and a note PC 110 are communicably connected to one projector 200.

As shown in Fig. 2, the note PC 100 includes a control unit 101, a video output unit 102, and a memory unit 103.

The video output unit 102 includes, for example, a USB interface (not shown) that can be connected with the USB cable 300 and is connected with the projector 200 via the USB cable 300. The video output unit 102 performs data communication with the projector 200 via the USB cable 300 and converts image data or the like into a signal that can be communicated via the USB cable 300, thereby transmitting the signal to the projector 200. The video output unit 102 converts a command received from the projector 200 into a signal that can be recognized in the control unit 101 and outputs the signal to the control unit 101.

The memory unit 103 stores various control programs for enabling the control unit 101 or the video output unit 102 to realize any function, or information such as image data to be output to the projector 200 via the video output unit 102.

When the video output unit 102 and the projector 200 are connected to each other via the USB cable 300, the control unit 101 gives image data read from the memory unit 103 a synchronization signal and transmits the image data to the projector 200. The control unit 101 controls the transmission of image data in response to a command input from the projector 200 via the video output unit 102. For example, when a command requesting the supply of image data (data supply request signal) is input from the projector 200, the control unit 101 transmits the image data. When a command requesting the suspension (suspension request signal) is input from the projector 200, the control unit 101 suspends the transmission of image data and is brought into a standby state. When a command requesting the resumption of image data transmission (resumption request signal) is input from the projector 200, the control unit 101 in the standby state awakes from the standby state and resumes the transmission of image data.

The term stand by state as used herein means the state where a communicable state is enabled between the note PC 100 and the projector 200 without image data being transmitted from the note PC 100 to the projector 200, and the note PC 100 is waiting for an image data resumption request signal transmitted from the projector 200. Since the note PC 100 in the standby state is in the communicable state, that is, since identification or the like for the communication method between the note PC 100 and the projector 200 is enabled, the note PC 100 can immediately transmit image data to the projector 200 when the resumption request signal of image data transmission is input.

The note PC 110 includes a control unit 111, a video output unit 112, and a memory unit 113 and is communicably connected with the projector 200 through, for example, a wireless local area network (referred to as wireless LAN or WLAN) via the video output unit 112. The description of configuration and function similar to those of the note PC 100 is omitted.

The video output unit 112 includes, for example, a wireless communication interface that communicates with the projector 200 through the wireless LAN. The video output unit 112 converts image data or the like into a signal that can be communicated through the wireless LAN, transmits the signal to the projector 200, and converts a command received from the projector 200 into a signal that can be recognized in the control unit 111.

The projector 200 includes an image display unit 201, a card insertion unit 202, a memory unit 203, an external apparatus connecting unit (video input unit) 204, a control unit 205, an image processing unit 206, a key input unit (operation unit) 207, and a storage device 208. The control unit 205 and the image processing unit 206 constitute a CPU 209.

For example, the projector 200 displays an image by decoding and regenerating image data input from the note PCs 100 and 110 using software, that is, so-called software decode.

The image display unit 201 emits a modulated light modulated by, for example, a light modulation device and enlarges and projects the modulated light on a screen or the like based on image data received from the image supply apparatuses 100 and 110.

The card insertion unit 202 is an interface to which a freely removable external card memory or the like is connected. For example, the card insertion unit 202 reads information such as image data or a program stored in the external card memory or the like.

The memory unit 203 includes a memory area, a data storage area, and a video random access memory (VRAM) area.

The memory unit 203 holds various control programs for enabling the control unit 205, the image processing unit 206, or the like to realize any function. For example, the memory unit 203 holds a plurality of decode programs that decode compressed or encoded image data in accordance with the kinds of image supply apparatuses or image data.

The memory area of the memory unit 203 is an area where the decode program is expanded. The data storage area is an area where image data input from the note PCs 100 and 110 via the external apparatus connecting unit 204 is stored. The VRAM area is an area where the image data decoded by the control unit 205 is stored.

The external apparatus connecting unit 204 includes a plurality of interfaces, for example, a USB interface 2041 that is communicably connected with the note PC 100 via the USB cable 300 and a wireless LAN interface 2042 that is communicably connected with the note PC 110 via a wireless LAN. The external apparatus connecting unit 204 includes an identification unit formed of, for example, a comparator, identifies whether or not image data, a synchronization signal, or the like is input via each of the interfaces, and notifies the control unit 205 of the presence or absence of the input of the image data or the like.

The external apparatus connecting unit 204 analyzes a destination or protocol of a command output from the control unit 205 and transmits the command from an interface connected to an image supply apparatus corresponding to the destination of the command. The external apparatus connecting unit 204 stores image data received from the note PCs 100 and 110 into the data storage area of the memory unit 203.

The control unit 205 analyzes the format of image data stored in the data area of the memory unit 203 and expands a decode program corresponding to the image data in the memory area of the memory unit 203. The control unit 205 decodes the image data stored in the data area of the memory unit 203 in accordance with the expanded decode program and expands the decoded image data in the VRAM area of the memory unit 203.

The control unit 205 outputs a suspension request signal for image data, a resumption request signal for image data transmission, or the like to the external apparatus connecting unit 204 for the note PCs 100 and 110.

The image processing unit 206 performs, for example, image correction on image data.

The key input unit 207 is an input unit that is operated by a user and to which an instruction from the user is input. The key input unit 207 includes, for example, a power source button for giving an instruction to activate or shutdown the projector 200, a video search button for searching an image supply apparatus that supplies an image signal, and a source selection button for selecting a desired image supply apparatus.

The storage device 208 is a nonvolatile memory such as, for example, an erasable programmable ROM (EPROM) or an electrically erasable ROM (EEROM) and holds, for example, setting information or the like of the projector 200.

Next, an example of a method for displaying image data transmitted from the note PC 100 to the projector 200 by the projector 200 will be described. As image data transmitted from the note PC 100 to the projector 200, for example, image data (for example, successive image data constituting a video) that is generated by the note PC 100 and displayed on a display screen (not shown) of the note PC 100 is used for the description.

As shown in Fig. 2, when the note PC 100 and the projector 200 are connected to each other via the USB cable 300, the video output unit 102 of the note PC 100 transmits image data given a synchronization signal to the projector 200. When receiving the image data via the USB interface 2041, the external apparatus connecting unit 204 of the projector 200 analyzes the synchronization signal given to the image data and notifies the control unit 205 that the transmission of the image data has been requested from the note PC 100 via the USB interface. The external apparatus connecting unit 204 stores the image data received from the note PC 100 into the data storage area of the memory unit 203.

Based on the notification from the external apparatus connecting unit 204, the control unit 205 expands a decode program that decodes the image data communicated via the USB cable 300 in the memory area of the memory unit 203. In accordance with the decode program expanded in the memory area of the memory unit 203, the control unit 205 decodes the image data stored in the data storage area of the memory unit and expands the image data in the VRAM area of the memory unit 203. The control unit 205 outputs the image data expanded in the VRAM area of the memory unit 203 to the image display unit 201. Thus, the image display unit 201 modulates the input image data into a modulated light and projects an image based on the image data on a screen or the like.

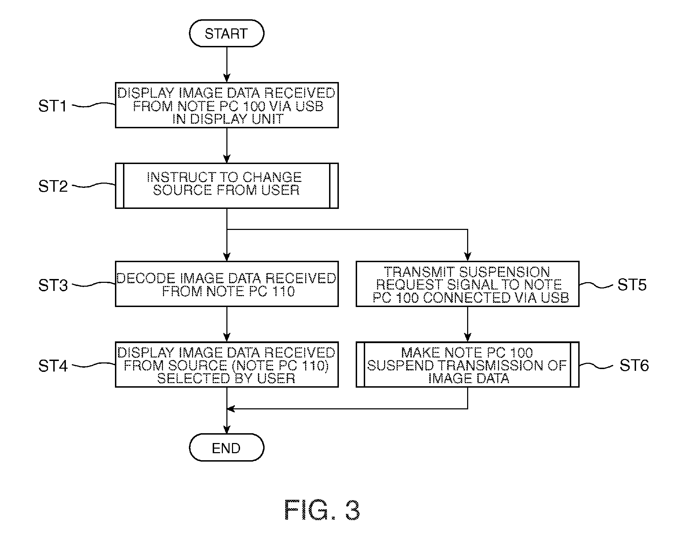

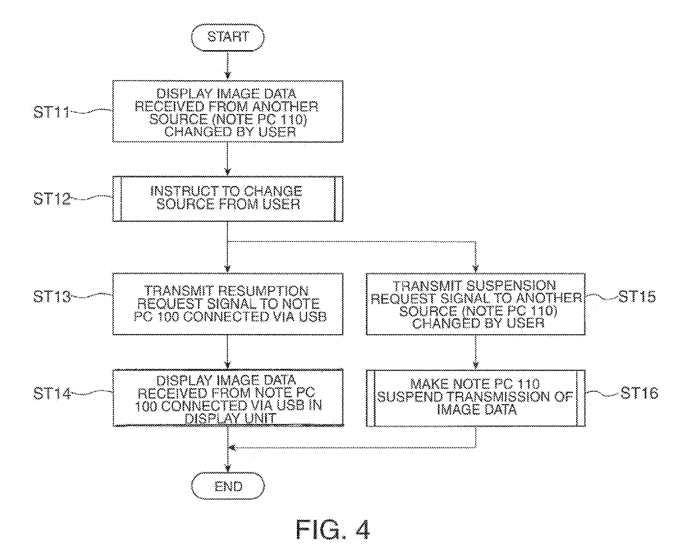

Next, an example of operation of the image display system according to the embodiment will be described with reference to Figs. 3 and 4. Fig. 3 is a flowchart showing an example of a method for requesting the suspension of image data.

First, when image data is input from the note PC 100 to the projector 200 in the state of being communicably connected with the note PC 100 via the USB cable 300, the projector 200 converts the image data received from the note PC 100 and projects the converted image data on a screen or the like as described above (Step ST1). When image data is successively input from the note PC 100, the projector 200 successively generates images displayed by the image display unit 201 and displays a video based on the image data transmitted from the note PC 100.

When a user presses the key input unit 207 (e.g. a video search button thereof) (Step ST2), the control unit 205 detects whether or not there is an image supply apparatus that is transmitting image data to the external apparatus connecting unit 204 other than the note PC 100.

Next, when an instruction to select the note PC 110 as an image supply apparatus is input from the user via the key input unit 207 (e.g. a source selection button thereof), the control unit 205 starts the communication with the note PC 110.

When the key input unit 207 (e.g. a video search button thereof) is pressed, and image data is transmitted from the note PC 110 to the external apparatus connecting unit 204 via the wireless LAN, the external apparatus connecting unit 204 stores the image data into the data storage area of the memory unit 203, analyzes a synchronization signal given to the image data, and notifies the control unit 205 that the transmission of the image data is requested from the note PC 110 via the wireless LAN. Based on the notification from the external apparatus connecting unit 204, the control unit 205 expands a decode program that decodes the image data transmitted via the wireless LAN in the memory area of the memory unit 203. In accordance with the decode program expanded in the memory area, the control unit 205 decodes the image data stored in the memory area and expands the image data in the VRAM area of the memory unit 203 (Step ST3). The control unit 205 outputs the image data expanded in the VRAM area of the memory unit 203 to the image display unit 201. The image display unit 201 modulates the input image data into a modulated light and projects an image based on the image data on a screen or the like (Step ST4).

Returning to Step ST2, when an instruction to select the note PC 110 as an image supply apparatus is input from a user, the control unit 205 outputs to the external apparatus connecting unit 204 a suspension request signal requesting an image supply apparatus other than the note PC 110, that is, e.g. the note PC 100 to suspend the supply of image data. The external apparatus connecting unit 204 outputs the suspension request signal input from the control unit 205 from the USB interface 2041 and transmits the signal to the note PC 100 via the USB cable 300 (Step ST5). When receiving the suspension request signal, the note PC 100 suspends the transmission of image data to the projector 200 and is brought into the standby state (Step ST6).

As described above, when the note PC 110 is selected by a user as a source of image data to be displayed in the image display unit 201 in the state where the connection with the note PCs 100 and 110 is enabled for the projector 200 under the situation where an image based on image data received from the note PC 100 is being displayed in the image display unit 201, the projector 200 transmits a suspension request signal to the note PC 100 other than the note PC 110. Thus, since the note PC 100 is in the standby state while the projector 200 receives image data from the note PC 110 and displays the image data, image data is not transmitted from the note PC 100 to the projector 200. Therefore, the control unit 205 does not decode image data received from the note PC 100 that is not selected as an image supply apparatus for displaying an image in the projector 200, and image data received from the note PC 100, decoded image data, or the like is not stored into the memory unit 203. Thus, the operational load of the CPU 209 is reduced, and the memory area to be used can be reduced.

Next, with reference to Fig. 4, an example of a method for making an image supply apparatus that has been suspended resume the transmission of image data will be described. Fig. 4 is a flowchart showing an example of a method for requesting the resumption of image data.

As shown in Fig. 4, when an image supply apparatus that supplies image data to the projector 200 is changed from the note PC 100 to the note PC 110 by a user, the note PC 110 successively transmits image data to the projector 200. The projector 200 decodes the image data received from the note PC 110, converts the image data into a modulated light, and projects the modulated light on a screen or the like (Step ST11). On the other hand, the note PC 100 stops the transmission of image data in the standby state in accordance with a suspension request signal.

In this case, when a user presses the key input unit 207 (e.g. a video search button thereof) (Step ST12), the control unit 205 determines whether or not there is an image supply apparatus that transmits image data to the external apparatus connecting unit 204 other than the note PC 100. For example, the control unit 205 stores the image supply apparatus to which the suspension request signal has been transmitted in Step ST5 into the memory unit 203, thereby detecting the note PC 100.

Next, when a user inputs an instruction to select the note PC 100 as an image supply apparatus via the key input unit 207 (e.g. a source selection button thereof), the control unit 205 transmits a resumption request signal requesting the resumption of supply of data to the note PC 100 designated by the user (Step ST13). The note PC 100 that has received the resumption request signal resumes the transmission of image data and transmits the image data to the external apparatus connecting unit 204 of the projector 200 via the USB cable 300. The external apparatus connecting unit 204 outputs the received image data to the data storage area of the memory unit 203.

Similar to Step ST3 of Fig. 3, in Step ST14, the control unit 205 decodes the image data received from the note PC 100 and stored in the data storage area of the memory unit 203 in accordance with the decode program expanded in the memory area of the memory unit 203 for decoding the image data communicated via the USB cable 300, and expands the image data in the VRAM area of the memory unit 203. The control unit 205 outputs the image data expanded in the VRAM area of the memory unit 203 to the image display unit 201. The image display unit 201 modulates the input image data into a modulated light and projects an image based on the image data on a screen or the like (Step ST14).

Returning to Step ST12, when a user inputs an instruction to select the note PC 100 as an image supply apparatus, the control unit 205 outputs to the external apparatus connecting unit 204 a suspension request signal requesting an image supply apparatus other than the note PC 100, that is, the note PC 110 to suspend the supply of image data. The external apparatus connecting unit 204 outputs from the wireless LAN interface 2042 the suspension request signal input from the control unit 205 and transmits the signal to the note PC 110 via the wireless LAN (Step ST15). When receiving the suspension request signal, the note PC 110 suspends the transmission of image data to the projector 200 and is brought into the standby state (Step ST16).

As described above, when a user selects the note PC 100 as a source of image data to be displayed in the image display unit 201 in the state where the connection with the note PCs 100 and 110 is enabled for the projector 200 under the situation where the projector 200 is displaying an image based on the image data received from the note PC 110 in the image display unit 201 and the note PC 100 is in the standby state, the projector 200 transmits a resumption request signal to the note PC 100 and transmits a suspension request signal to the note PC 110 other than the note PC 100. Thus, since the note PC 110 is in the standby state while the projector 200 receives image data from the note PC 100 and displays an image, image data is not transmitted from the note PC 110 to the projector 200. Therefore, the control unit 205 does not decode image data received from the note PC 110 that is not selected as an image supply apparatus for displaying an image in the projector 200. In addition, image data received from the note PC 110, decoded image data, or the like is not stored in the memory unit 203. Thus, the operational load of the CPU 209 is reduced, and the memory area to be used can be reduced.

When receiving a suspension request signal, the note PC 100 or 110 that is not instructed to transmit image data by a user is brought into the standby state and waits for the reception of a resumption request signal. In this manner, since the communicable connection is enabled between the note PC 100 or 110 and the projector 200 even when image data is not transferred, work for enabling again the communication between the note PC 100 or 110 and the projector 200 is no more required upon requesting the resumption of supply of image data. Therefore, the time for resuming the transmission of image data can be reduced. Accordingly, it is possible to immediately transmit image data to the projector 200 to display the same without keeping a user waiting.

### Second Embodiment

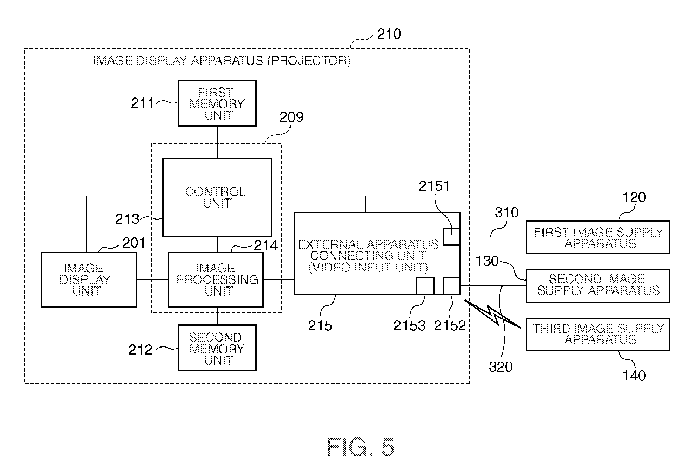

Next, a second embodiment of an image display system will be described by using Fig. 5. Fig. 5 is a schematic view showing another example of the configuration of image supply apparatuses and an image display apparatus. The constituent members having a similar configuration or function to those shown in Fig. 2 are denoted by the same reference numerals or names, and the detailed description is omitted.

As shown in Fig. 5, the image display system according to the embodiment includes a first image supply apparatus 120, a second image supply apparatus 130, a third image supply apparatus 140, and an image display apparatus 210 that is communicably connected with each of the image supply apparatuses. The image display system includes, for example, a USB cable 310 connecting the first image supply apparatus 120 with the image display apparatus 210, a high-definition multi media interface (HDMI) connecting unit 320 connecting the second image supply apparatus 130 with the image display apparatus 210, and a wireless LAN connecting unit connecting the third image supply apparatus 140 with the image display apparatus 210 through wireless communication, as means for ensuring the communication between the first to third image supply apparatuses 120 to 140 and the image display apparatus 210.

The HDMI connecting unit 320 can transfer image data, audio data, and a control signal together through one cable and is mainly used as means for connecting a personal computer with a display such as a liquid crystal display device. The wireless LAN connecting unit transfers a plurality of image data captured by a video camera or the like and forming a moving image successively via a wireless LAN. However, the connecting unit may transfer image data through a wired LAN without limiting to a wireless LAN.

The image display apparatus 210 includes the image display unit 201, a first memory unit 211, a second memory unit 212, a control unit 213, an image processing unit 214, and an external apparatus connecting unit 215. The control unit 213 and the image processing unit 214 constitute the CPU 209.

The image display apparatus 210 displays an image by decoding and regenerating image data input from the first to third image supply apparatuses 120 to 140 using hardware, that is, so-called hardware decode.

The first memory unit 211 holds various control programs for enabling the control unit 213, the image processing unit 214, or the like to realize any function.

The second memory unit 212 includes a data storage area for holding image data decoded by the image processing unit 214.

The control unit 213 centrally controls the image display apparatus 210.

The image processing unit 214 performs data conversion processing on image data received from the first to third image supply apparatuses 120 to 140 via the external apparatus connecting unit 215 for converting the image data into data corresponding to the image display unit 201. That is, the image processing unit 214 includes first to third data conversion processing units (not shown) corresponding to the first to third image supply apparatuses 120 to 140 that transmit image data with their respective transferring means different from one another. The image processing unit 214 stores the image data subjected to the data conversion processing in the VRAM area of the second memory unit 212. The image display unit 201 reads out the image data stored in the VRAM area of the second memory unit 212 to display the same.

The external apparatus connecting unit 215 includes a USB interface 2151 connected with the USB cable 310, an HDMI interface 2152 connected with the HDMI connecting unit 320, and a wireless LAN interface 2153 connected with the third image supply apparatus 140 through wireless communication as image data transferring means. The external apparatus connecting unit 215 outputs image data received from the first to third image supply apparatuses 120 to 140 to the image processing unit 214.

Although not shown, the image display apparatus 210 may include the card insertion unit 202, the key input unit 207, and the storage device 208 similarly to Fig. 2.

Next, an example of a data communication method of an image display system according to the embodiment will be described.

For example, when the first image supply apparatus 120 and the image display apparatus 210 are connected to each other via the USB cable 310, the first image supply apparatus 120 transmits image data to the image display apparatus 210. When receiving the image data via the USB interface 2151, the external apparatus connecting unit 215 of the image display apparatus 210 transfers the received image data to the image processing unit 214. When receiving the image data, the image processing unit 214 converts the received image data into image data to be displayed in the image display unit 201 with the first data conversion processing unit (not shown) corresponding to the received image data and outputs the image data to the image display unit 201. The image display unit 201 modulates the input image data into a modulated light and projects an image based on the image data on a screen or the like.

In the same manner as described above, the image display apparatus 210 receives image data transmitted from the second image supply apparatus 130 and the third image supply apparatus 140 and displays the same in the image display unit 201.

With this configuration, for example, when a user selects the second image supply apparatus 130 as a source of image data to be displayed in the image display unit 201 in the state where the connection with the first to third image supply apparatuses 120 to 140 is enabled for the image display apparatus 210 and in the case where a video or the like based on the image data received from the first image supply apparatus 120 is displayed in the image display unit 201, the image display apparatus 210 transmits a suspension request signal to the first and third image supply apparatuses 120 and 140 other than the second image supply apparatus 130. Thus, since the first and third image supply apparatuses 120 and 140 are in the standby state while the image display apparatus 210 receives image data from the second image supply apparatus 130 and displays an image, image data is not transmitted from the first and third image supply apparatuses 120 and 140 to the image display apparatus 210.

For example, when a user selects the third image supply apparatus 140 as a source of image data to be displayed in the image display unit 201 in the state where the image display apparatus 210 displays an image based on image data received from the second image supply apparatus 130 in the image display unit 201 and the first and third image supply apparatuses 120 and 140 are in the standby state, the image display apparatus 210 transmits a resumption request signal to the third image supply apparatus 140 and transmits a suspension request signal to the first and second image supply apparatuses 120 and 130 other than the third image supply apparatus 140. Thus, since the first and second image supply apparatuses 120 and 130 are in the standby state while the image display apparatus 210 receives image data from the third image supply apparatus 140 and displays an image, image data is not transmitted from the first and second image supply apparatuses 120 and 130 to the image display apparatus 210.

Accordingly, it is sufficient for the image processing unit 214 to perform data conversion processing only on image data received from the second image supply apparatus 130. Therefore, since image data that a user does not give an instruction to display is not processed by the first to third data conversion processing units or the like of the image processing unit 214, the operational load of the CPU 209 can be reduced.

As the projector 200 described in the embodiment as an example of an image display apparatus, it is possible to use, for example, so-called a liquid crystal three-plate type projector that separates white light radiated by a light source into three primary color components of light of red light, blue light, and green light, modulates the respective color lights with liquid crystal light valves (light modulation device) for the respective color lights into a modulated light in accordance with image data, and enlarges and projects a synthesized full-color modulated light on a screen by a projection lens.

The projector 200 is not limited to a liquid crystal projector but may be, for example, a projector or the like using a digital micromirror device (DMD).

The image display apparatus is not limited to a projector but may be, for example, a display, a communication terminal, or the like having a liquid crystal screen.

Although the key input unit 207 of the projector 200 has been described by using an operation button or a key disposed in the projector 200 as an example, the invention is not limited thereto. For example, the key input unit 207 may be configured to receive an instruction signal from a remote controller or the like to be remotely operated.

For example, the image supply apparatus may be a game machine, a mobile-phone handset, a DVD player, a video signal supply apparatus connected through wireless communication, or the like.

The external apparatus connecting unit 204 of the projector 200 may include, in addition to a USB interface or a LAN interface (e.g. an interface for wireless and/or non-wireless LAN), for example, an interface using an HDMI that is used mainly in household appliances for transferring audio data and image data.

The process of operation in the image supply apparatus 100 and the image display apparatus 200 can be used as a program to be executed by a computer or a computer-readable recording medium having the program recorded thereon. A computer system reads and executes the program to thereby perform the above processing. The term computer system as used herein may include a CPU, various kinds of memories, an OS, and hardware such as peripherals.

The computer system may include a Web site providing environment (or display environment) when a WWW system is used.

The term computer-readable recording medium refers to a writable nonvolatile memory such as a flexible disk, a magneto-optical disk, a ROM, and a flash memory, a portable medium such as a CD-ROM, and a storage device such as a hard disk incorporated in a computer system.

Further, the computer-readable recording medium includes a medium storing a program for a predetermined time period, such as a volatile memory (for example, dynamic random access memory (DRAM)) incorporated in a computer system that becomes a server or a client in the case where the program is transmitted via a network such as the Internet, or a communication line such as a telephone line.

The above-mentioned program may be transmitted from the computer system that stores the program in the storage device or the like via a transmission medium, or may be transmitted by a transmitted wave through the transmission medium to another computer system. In this case, the transmission medium for transmitting the program refers to a medium having a function for transmitting information like a network (communication network) such as the Internet, or a communication line (communication wire) such as a telephone line.

Further, the above-mentioned program may be a program for realizing a part of the above-mentioned function.

Moreover, the program may be a program that can realize the above-mentioned function by a combination of a program already recorded in the computer system, that is, so-called a differential file (differential program).
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An image display apparatus comprising:
an external apparatus connecting unit (204; 215) configured to be connected with a plurality of image supply apparatuses (100, 110; 120, 130, 140) for receiving a plurality of data transmitted from the image supply apparatuses (100, 110; 120, 130, 140);
an output unit (209) configured to output an image based on the data to a display unit (201);
an operation unit (207) configured to receive an operation input; and
a control unit (205) configured to output, when the operation input to designate the image supply apparatus that outputs the data to be displayed in the display unit (201) is input via the operation unit (207), a suspension request signal requesting the suspension of supply of the data to the image supply apparatuses other than the image supply apparatus designated by the operation input.

2. The image display apparatus according to claim 1, wherein
when another of the image supply apparatuses is designated as the image supply apparatus that outputs the data to be displayed in the display unit (201) via the operation unit (207), the control unit (205) outputs a resumption request signal requesting the resumption of supply of the data to the designated image supply apparatus and outputs the suspension request signal to the image supply apparatuses other than the designated image supply apparatus.

3. The image display apparatus according to claim 1 or 2, the image display apparatus being a projector (200; 210) configured to project an image based on the data on a screen or a display that displays an image on a display screen.

4. An image display system comprising:
a plurality of image supply apparatuses (100, 110; 120, 130, 140); and
an image display apparatus (200; 210) configured to receive data transmitted from the image supply apparatuses (100, 110; 120, 130, 140), wherein
the image display apparatus (200; 210) includes
an external apparatus connecting unit (204; 215) being connected with the plurality of image supply apparatuses (100, 110; 120, 130, 140) and being configured to receive a plurality of data transmitted from the image supply apparatuses (100, 110; 120, 130, 140),
an output unit (209) configured to output an image based on the data to a display unit (201),
an operation unit (207) configured to receive an operation input, and
a control unit (205) configured to output, when the operation input to designate the image supply apparatus that outputs the data to be displayed in the display unit (201) is input via the operation unit (207), a suspension request signal requesting the suspension of supply of the data to the image supply apparatuses other than the image supply apparatus designated by the operation input.

5. The image display system according to claim 4, wherein,
when another of the image supply apparatuses is designated as the image supply apparatus that outputs the data to be displayed in the display unit (201) via the operation unit (207), the control unit (205) outputs a resumption request signal requesting the resumption of supply of the data to the designated image supply apparatus and outputs the suspension request signal to the image supply apparatuses other than the designated image supply apparatus.

6. The image display system according to claim 4 or 5, wherein,
when one or more of the plurality of image supply apparatuses receives a suspension request signal from the control unit (205),
the one or more image supply apparatuses receiving the suspension request signal operate in accordance with a signal output from the image display apparatus and suspend the output of the data in accordance with the received suspension request signal.

7. The image display system according to claim 5 or 6, wherein,
when one of the plurality of image supply apparatuses receives the resumption request signal from the control unit (205),
the one image supply apparatus receiving the resumption request signal operates in accordance with a signal output from the image display apparatus and resumes the output of the data in accordance with the received resumption request signal.

8. A computer program product stored on a computer usable medium, comprising: computer readable program means for causing a first computer to be configured to execute:
receiving, by an external apparatus connecting unit (204; 215) configured to be connected to a plurality of second computers, data transmitted from the plurality of second computers;
outputting an image based on the data to a display unit (201);
outputting, when an operation input to designate the second computer that outputs the data to be displayed in the display unit (201) is input via an operation unit (207) configured to receive the operation input, a suspension request signal requesting the suspension of supply of the data to the second computers other than the second computer designated by the operation input.

9. The computer program product according to claim 8, further comprising computer readable program means for causing the first computer to be configured to execute:
outputting, when another of the second computers is designated as the second computer that outputs the data to be displayed in the display unit (201) via the operation unit (207), a resumption request signal requesting the resumption of supply of the data to the designated second computer and outputting the suspension request signal to the second computers other than the designated second computer.

10. The program according to claim 8 or 9, further comprising computer readable program means for causing the second computer to be configured to execute
suspending the output of the data in accordance with the suspension request signal when the suspension request signal is received from the first computer, and
resuming the output of the data in accordance with the resumption request signal when the resumption request signal is received from the first computer.

11. A computer program product stored on a computer usable medium, comprising: computer readable program means for causing a second computer (100; 110; 120; 130; 140) to be configured to execute:
suspending the output of data in accordance with the suspension request signal when the suspension request signal is received from an image display apparatus according to at least one of claims 1 to 3, and
resuming the output of data in accordance with the resumption request signal when the resumption request signal is received from an image display apparatus according to claim 2 or 3.

12. An image display method comprising the steps of:
receiving data transmitted from a plurality of image supply apparatuses;
displaying an image based on the received data; and
outputting, when an operation input to designate the image supply apparatus that outputs the data to be displayed is input, a suspension request signal requesting the suspension of supply of the data to the image supply apparatuses other than the image supply apparatus designated by the operation input.

13. The image display method according to claim 12 further comprising the steps of:
outputting, when another of the image supply apparatuses is designated as the image supply apparatus that outputs the data to be displayed, a resumption request signal requesting the resumption of supply of the data to the designated image supply apparatus and outputting the suspension request signal to the image supply apparatuses other than the designated image supply apparatus.
